# EUROPÄISCHE PATENTSCHRIFT

(11) **EP 1 236 945 B1**
(45) Veröffentlichungstag und Bekanntmachung des Hinweises auf die Patenterteilung: **01.10.2003**
(21) Anmeldenummer: 02002599.5
(22) Anmeldetag: 05.02.2002
(51) Int. Cl.: F16L 19/028

(54) **Rohrverbindung mit einem umgeformten Rohr**
Pipe joint with deformed pipe
Raccord de tuyau comprenant un tuyau déformé

(30) Priorität: 21.02.2001 DE 10108309
(43) Veröffentlichungstag der Anmeldung: 04.09.2002
(73) Patentinhaber: Eifeler Maschinenbau GmbH, 53902 Bad Münstereifel (DE)
(72) Erfinder: Schorn-Gilson, Alfons, 53913 Swisstal-Odendorf (DE); Dahlen, Jürgen, 53879 Euskirchen (DE)
(74) Vertreter: Bauer, Dirk, Dipl.-Ing. Dipl.-Kfm.

(56) Entgegenhaltungen:
- DE-A- 19 511 063
- DE-A- 19 512 464
- PATENT ABSTRACTS OF JAPAN vol. 1998, no. 01, 30. Januar 1998 (1998-01-30) & JP 09 242949 A (HITACHI METALS LTD), 16. September 1997 (1997-09-16)

## Beschreibung

Die Erfindung betrifft eine Rohrverbindung mit einem umgeformten Rohr, einem Verschraubungskörper mit einem Innenkonus und einem sich daran anschließenden zylindrischen End-abschnitt sowie einer Überwurfmutter mit einem Innenkonus, wobei das umgeformte Rohr eine erste keglige Spannfläche, die mit dem Innenkonus der Verschraubungskörpers zusammenwirkt, und eine zweite keglige Spannfläche, die mit dem Innenkonus der Überwurfmutter zusammenwirkt, aufweist, und wobei zwischen der Stirnfläche des umgeformten Rohres und einer gegenüberliegenden Stirnfläche des Verschraubungskörpers eine Dichtung angeordnet ist, die zumindest zum Teil aus einem verformbaren Kunststoffmaterial besteht.

Eine derartige Rohrverbindung ist aus der DE 19511063 A1 bekannt. Das umgeformte Rohr weist einen achsparallelen Endabschnitt auf, der der ersten kegligen Spannfläche vorgelagert ist und denselben Außendurchmesser wie das Rohr im nicht umgeformten Zustand aufweist. Mit seiner Mantelfläche liegt der achsparallele Endabschnitt an einer Mantelfläche eines zylindrischen Abschnitts einer Bohrung in dem Verschraubungskörper an. Zwischen der Stirnseite des achsparallelen Rohrabschnitts und dem Rohrsitzboden im dem Verschraubungskörper ist ein flacher Dichtungsring angeordnet, der infolge eines Anziehens der Überwurfmutter komprimiert wird. Der Montagevorgang ist bei der bekannten Rohrverbindung dann beendet, wenn eine über den größten Durchmesser der ersten kegligen Spannfläche radial nach außen vorstehende Anlageringfläche an einer ringförmigen Stirnfläche des Verschraubungskörpers zur Anlage kommt.

Aufgrund der Maßtoleranzen bei dem umgeformten Rohr, der Maßtoleranzen bei dem Verschraubungskörper sowie dessen eingeschränkter Oberflächenqualität im Bereich des Rohrsitzbodens und des davor angeordneten zylindrischen Abschnitts, kann bei der bekannten Rohrverbindung nicht in allen Fällen eine zuverlässige Abdichtung erzielt werden.

In der DE 195 26 316 A1 ist eine Rohrverbindung beschrieben, bei der ein umgeformter Endabschnitt eines Rohres eine erste mit dem Verschraubungskörper zusammenwirkende radial verlaufende Spannfläche, und eine zweite, mit der Überwurfmutter zusammenwirkende keglige Spannfläche besitzt. Im Bereich einer Stirnfläche des Verschraubungskörpers ist eine Ringnut vorgesehen, in die ein Dichtring eingelegt ist, der infolge des Anziehens der Überwurfmutter komprimiert wird. Eine Zentrierung des umgeformten Rohrendes in dem Verschraubungskörper ist vor dem Anziehen der Überwurfmutter nicht möglich. Des weiteren ist die Verwendung eines genormten Verschraubungskörpers mit einem 24 Grad-Konus und einem zylindrischen Endabschnitt der Bohrung nicht möglich.

Die DE 40 41 677 A1 offenbart eine Rohrverschraubung mit einem Schneidring, bei dem ein gerades, nicht umgeformtes Rohrende in einen genormten Verschraubungskörper mit einem 24 Grad-Konus eingesteckt werden kann. In einen Spaltbereich zwischen der 24 Grad-Konusfläche des Verschraubungskörpers und dem Außenmantel des Rohrendes wird ein vorderer Abschnitt eines sich außen verjüngenden konischen Schneidrings eingeführt, der auf der gegenüberliegenden Stirnseite mit einer 45 Grad-Schräge versehen ist, die mit einer entsprechenden Anschlagfläche einer genormten Überwurfmutter zusammenwirkt. Infolge eines Anziehens der Überwurfmutter graben sich die ringförmigen Schneidkanten des Schneidrings formschlüssig in das Material der Rohrleitung ein. Zum druckdichten Abdichten eines Spaltes, der vom Ende der Rohrleitung zunächst radial nach außen und sodann in achsparallele Richtung verläuft, ist eine zusätzliche Dichtungsanordnung vorgesehen, die einen aus einem elastomeren Material bestehenden Dichtungsring umfaßt, der vor der vorderen Stirnfläche des Schneidrings in einem Rücksprung in dem zylindrischen Abschnitt der Bohrung in dem Verschraubungskörper angeordnet ist. Die Verwendung eines genormten Verschraubungskörpers kommt aus diesem Grunde wiederum nicht in Betracht. Des weiteren ist es bei Schneidringverbindungen generell als nachteilig anzusehen, daß diese nicht ohne weiteres wieder gelöst und anschließend wieder hergestellt werden können, da eine hinreichende Dichtigkeit nach der Remontage nicht garantiert werden kann.

Der Erfindung liegt die Aufgabe zugrunde, eine Rohrverbindung mit einem umgeformten Rohr vorzuschlagen, die sich durch eine sehr zuverlässige Dichtwirkung und die Möglichkeit einer wiederholten Montage auszeichnet, wobei ein genormter Verschraubungskörper mit einem 24 Grad-Konus sowie eine genormte Überwurfmutter mit einem 90 Grad-Konus verwendbar sein sollte.

Ausgehend von einer Rohrverbindung der eingangs beschriebenen Art wird diese Aufgabe erfindungsgemäß dadurch gelöst, daß das Kunststoffmaterial der Dichtung infolge einer axialen Komprimierung der Dichtung in entgegengesetzte Richtung zur Bewegungsrichtung des Rohres bei seiner Fixierung in eine Kammer pressbar ist, die von dem Innenkonus des Verschraubungskörpers einer an die erste keglige Spannfläche des umgeformten Rohres angrenzende Dichtfläche des umgeformten Rohres und einer Stirnfläche eines aus Kunststoffmaterial bestehenden Teils der Dichtung in deren unkomprimierten Zustand begrenzt wird.

Infolge des Anziehens der Überwurfmutter wird das Kunststoffmaterial der Dichtung in axiale Richtung komprimiert, wobei in einem Bereich radial außerhalb des komprimierten Bereichs eine Fließbewegung des Kunststoffmaterials entgegen der Anzugsrichtung stattfindet. Das Kunststoffmaterial fließt somit in eine Kammer, die außenseitig von der Kegelfläche des Verschraubungskörpers begrenzt wird. Diese Kegelfläche besitzt eine höhere Oberflächenqualität, d. h. insbesondere eine geringere Oberflächenrauheit, als der zylindrische Bohrungsabschnitt im Verschraubungskörper sowie der Rohrsitzboden. Aus diesem Grunde ist die Qualität der durch die Verpressung des Kunststoffmaterials der Dichtung erzielbaren Abdichtung in dem Bereich der Kegelfläche besonders gut.

Um die Dichtkammer im Bereich der Kegelfläche des Verschraubungskörpers zu schaffen, muß die im übrigen daran angepaßte erste keglige Spannfläche des umgeformten Rohres in axiale Richtung gesehen, kürzer als die Kegelfläche im Verschraubungskörper sein. Im Bereich der mit Kunststoffmaterial auszufüllenden Dichtkammer wird das umgeformte Rohr nach außen hin von einer im Durchmesser gegenüber der ersten kegligen Spannfläche reduzierten Dichtfläche begrenzt.

Eine besonders vorteilhafte Ausgestaltung der Verbindung besteht darin, daß der Innenkonus des Verschraubungskörpers einen Kegelwinkel von 24 Grad und der Innenkonus der Überwurfmutter einen Kegelwinkel von 90 Grad aufweist. Hierdurch wird die Verwendung genormter Bauteile möglich, wodurch die Kosten reduziert werden.

Die Erfindung weiter ausgestaltend ist vorgesehen, daß die Dichtung aus einem radial innen liegenden metallischen Ring und einem damit verbundenen radial außen liegenden Ring aus Kunststoffmaterial besteht, wobei die Breite des aus Kunststoffmaterial bestehenden Rings größer als die Breite des metallischen Rings ist.

Auf diese Weise wird die Möglichkeit geschaffen, den inneren metallischen Ring als Anschlagelement zu verwenden, da ein spürbarer Drehmomentanstieg beim Anziehen der Überwurfmutter in dem Moment zu verspüren ist, wenn der metallische Ring zwischen der Stirnfläche des Rohrendes und der ringförmigen Stirnfläche im Verschraubungskörper (Rohrsitzboden) eingeklemmt ist. Der axiale Überstand des aus Kunststoffmaterial bestehenden äußeren Rings ist dabei so zu bemessen, daß im Moment des beidseitigen Anschlags gegen den metallischen Ring eine solche Fließbewegung des Kunststoffmaterials stattgefunden hat, daß die Dichtkammer möglichst vollständig damit ausgefüllt ist.

Wenn der aus Kunststoffmaterial bestehende Ring zu beiden Seiten einen gleichen Überstand über den metallischen Ring aufweist, wird die Gefahr einer fehlerhaften Montage des Dichtungsrings ausgeschlossen.

Eine Weiterbildung der Erfindung besteht darin, daß die Dichtung aus einem radial innen liegenden metallischen Ring und einem damit verbundenen radial außen liegenden Ring aus Kunststoffmaterial besteht, wobei der aus dem Kunststoffmaterial bestehende Ring in einer Stufe des metallischen Rings angeordnet ist und sowohl radial nach außen als auch einseitig in axiale Richtung über den metallischen Ring vorsteht. Hierdurch kann eine besonders sichere Anlage des metallischen Rings am Rohrsitzboden des Verschraubungskörpers erzielt werden.

Während sich die vorgenannten Dichtungsringe in Form einer Kombination aus einem metallischen und einem aus Kunststoffmaterial bestehenden Ring insbesondere für Hochdruckanwendungen eignen, ist es im Niederdruckbereich ausreichend, wenn die Dichtung ausschließlich aus einem Kunststoffmaterial, vorzugsweise PTFE, besteht, und eine radial nach außen hin zunehmende Breite besitzt. Die Kosten für eine derartige Dichtung sind vergleichsweise gering und aufgrund der nach außen hin zunehmenden Breite wird die rückwärts gerichtete Fließbewegung des Kunststoffmaterials in die Kammer gefördert.

Die Erfindung weiter ausgestaltend ist vorgesehen, daß das umgeformte Rohr in axiale Richtung mit einer konischen Dichtfläche ausläuft, deren Kegelwinkel mindestens 30 Grad beträgt. Durch die konische Dichtfläche wird auf einfache Weise eine im Querschnitt keilförmige Kammer erzeugt. Bei Verwendung eines genormten Verschraubungskörpers mit einem Kegelwinkel von 24 Grad besitzt die im Querschnitt keilförmige Kammer einen Keilwinkel von mindestens 3 Grad. Um die Fließbewegung in die Spitze der Kammer zu begünstigen, sind Kegelwinkel an der konischen Dichtfläche von mehr als 50 Grad zu bevorzugen.

Des weiteren wird vorgeschlagen, daß das umgeformte Rohr an seinem Innenmantel einen achsparallelen Endabschnitt aufweist, dessen Außendurchmesser gegenüber dem Innendurchmesser des zylindrischen Endabschnitts des Verschraubungskörpers reduziert ist, wobei der Außenmantel des Endabschnitts des Rohres in die Dichtfläche übergeht.

Eine besonders gute Kraftübertragung von dem Rohrende auf die axial zu komprimierende Dichtung während des Anziehens der Überwurfmutter läßt sich erreichen, wenn das umgeformte Rohr an seinem Ende eine senkrecht zu seiner Längsachse ausgerichtete Stirnfläche besitzt. Diese Stirnfläche ist vorzugsweise außen angefast.

Die Erfindung wird nachfolgend anhand eines Ausführungsbeispiels einer Rohrverbindung, die in der Zeichnung dargestellt ist, näher erläutert. Es zeigt:
- Fig. 1: einen Teil-Längsschnitt durch eine aus Verschraubungskörper, umgeformtemRohr, Dichtungsring und Überwurfmutter bestehende Rohrverbindung im Montageendzustand;
- Fig. 2: einen vergrößerten Ausschnitt aus Figur 1 im Bereich des Dichtungsrings;
- Fig. 3: den Dichtungsring gemäß Figuren 1 und 2, jedoch im Zustand vor der Montage und
- Fig. 4: einen alternativen Dichtungsring im Zustand vor der Montage.

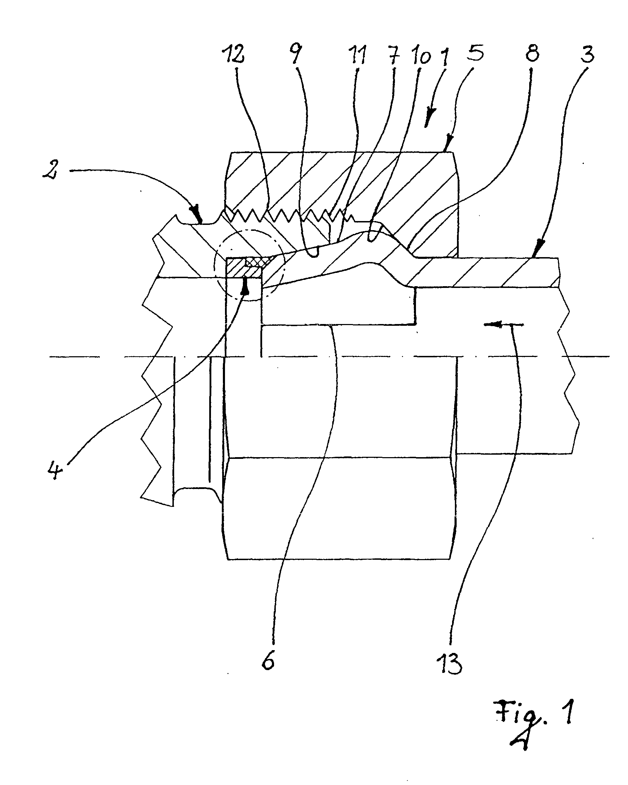

Eine in Figur 1 dargestellte Rohrverbindung 1 besteht aus einem nur teilweise dargestellten Verschraubungskörper 2, einem umgeformten Rohr 3, einer Dichtung 4 sowie einer Überwurfmutter 5. Das umgeformte Ende des Rohres 3 bildet einen Verbindungsabschnitt 6, mit dem eine druckdichte Verbindung zu dem Verschraubungskörper 2 hergestellt wird.

Mit Hilfe eines speziellen, vom Grundsatz her allgemein bekannten Umformwerkzeugs, wird das Rohr 3 in seinem Endabschnitt derart gestaucht, daß sich daran eine erste keglige Spannfläche 7 und eine entgegengesetzt geneigte zweite keglige Spannfläche 8 ausbilden. Die erste keglige Spannfläche 7 wirkt mit einem 24 Grad-Innenkonus 9 in dem Verschraubungskörper 2 zusammen und besitzt aus diesem Grunde ebenfalls einen Kegelwinkel von 24 Grad. Hingegen wirkt die zweite keglige Spannfläche 8 mit einem 90 Grad-Innenkonus 10 der Überwurfmutter 5 zusammen, weshalb diese Spannfläche 8 gleichfalls einen Kegelwinkel von 90 Grad besitzt.

Mit Hilfe eines Innengewindes 11 läßt sich die Überwurfmutter 5 auf ein entsprechendes Außengewinde 12 an dem Verschraubungskörper 2 aufschrauben, wodurch das Ende des umgeformten Rohres 3 in Richtung des Pfeiles 13 in den Verschraubungskörper 2 hinein verschoben wird. Dabei kommt es zum einen zu einer dichtenden Anlage der ersten kegligen Spannfläche 7 an dem Innenkonus 9 des Verschraubungskörpers 2.

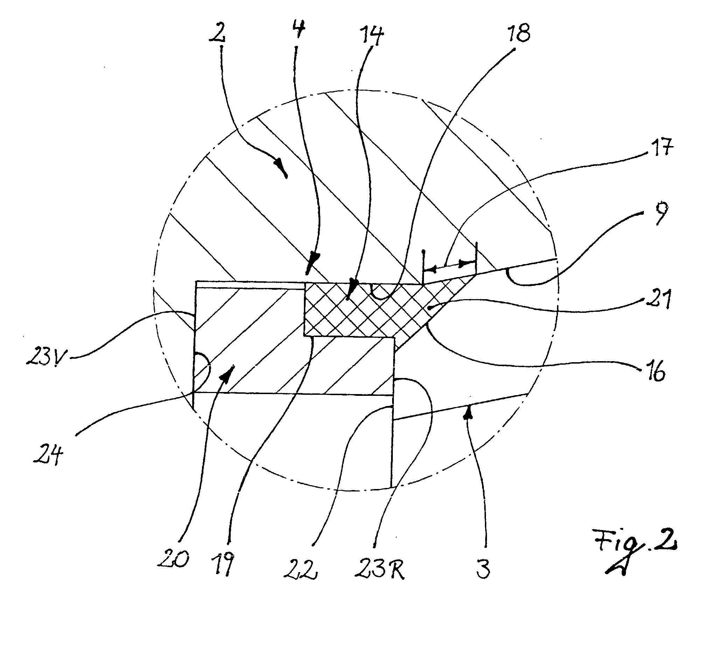

Des weiteren - wie sich besonders deutlich aus Figur 2 ergibt - befindet sich ein aus Kunststoffmaterial bestehender Ring 14 einer insgesamt als Funktionsdichtring zu bezeichnenden Dichtung 4 im Bereich zwischen einer kegligen Dichtfläche 16 des umgeformten Rohres 3, einem Abschnitt 17 des Innenkonus 9 des Verschraubungskörpers 2 sowie in einem Ringspalt zwischen einem zylindrischen Abschnitt 18 der Bohrung in dem Verschraubungskörper 2 und einem gestuften Absatz 19 eines metallischen Rings 20. In Figur 2 ist der Montagendzustand der Rohrverbindung 1 im Bereich der Dichtung 4 gezeigt, in dem eine Fließbewegung des Kunststoffmaterials des Rings 14 stattgefunden hat. In Folge dieser Fließbewegung hat sich das Kunststoffmaterial nahezu vollständig in einen keilförmigen Spitzenbereich einer Kammer 21 bewegt, die von dem Innenkonus 9 des Verschraubungskörpers 2 und der konischen Dichtfläche 16 am Ende des umgeformten Rohres 3 begrenzt wird. Da die Oberflächengüte des Innenkonus 9 des Verschraubungskörpers 2 besonders gut ist, wird in dem zwickelförmigen Endbereich der verformten Dichtung 4 eine besonders gute Dichtwirkung erzielt. In der in Figur 2 dargestellten Montageendstellung kommt eine radial verlaufende Stirnfläche 22 des umgeformten Rohres 3 an einer ebenfalls radial verlaufenden Stirnfläche 23 R des metallischen Rings 20 zur Anlage. Ebenso tritt eine gegenüberliegende radial verlaufende Stirnfläche 23 V des metallischen Rings 20 mit einer radial ausgerichteten Stirnfläche 24 des Verschraubungskörpers 2 (dem sogenannten Rohrsitzboden) in Kontakt. Da der Ring 20 der Dichtung 4 aus einem metallischen Material hergestellt ist, ist die Montageendstellung während des Montagevorgangs durch einen sehr steilen Drehmomentanstieg zu spüren. Die zuvor stattfindende Verformung des Kunststoffmaterials des Rings 14 erfordert hingegen wesentlich geringere ungefähr konstante Kräfte.

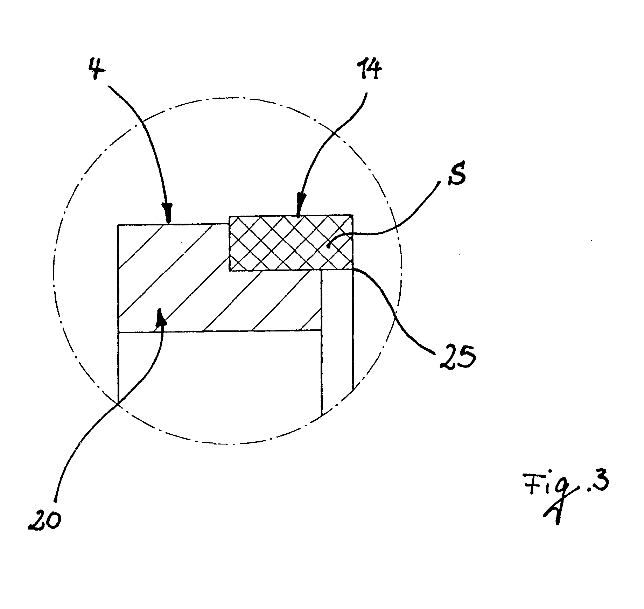

Figur 3 zeigt einen Querschnitt durch die Dichtung 4 in ihrem unverformten Ausgangszustand. Der im Querschnitt rechteckförmige, sowohl in radiale als auch einseitige axiale Richtung über den metallischen Ring 20 vorstehende Ring 14 aus Kunststoffmaterial ist mit dem metallischen Ring 20 entweder durch Verkleben oder durch Aufvulkanisieren verbunden. Der metallische Ring 20 und der aus Kunststoffmaterial bestehende Ring 14 bilden eine als Funktionsring zu bezeichnende Einheit, wodurch der Montagevorgang besonders einfach ist. Während des Montagevorgangs kommt die konische Dichtfläche 16 am Ende des Rohres 3 (siehe Figur 2) zuerst mit der unteren Kante 25 der Stirnfläche S des Rings 14 in Kontakt. Infolge weiterer achsparalleler Verschiebung des Rohres 3, das heißt auch der Dichtfläche 16, kommt es entlang dieser Dichtfläche 16 zu einer Fließbewegung, die das Kunststoffmaterial hauptsächlich entgegen der Bewegungsrichtung des Rohres 3 schräg nach oben aber auch in Bewegungsrichtung des Rohres schräg nach unten verdrängt. Das Volumen des überstehenden Teils des Rings 14 aus Kunststoffmaterial ist so zu bemessen, daß im Montage-Endzustand (Figur 2) der Zwischenraum zwischen der Dichtfläche 16 des Rohrendes der Stufe 19 des metallischen Rings 20 und der inneren Mantelfläche des Verschraubungskörpers 2 im Wesentlichen vollständig ausgefüllt ist.

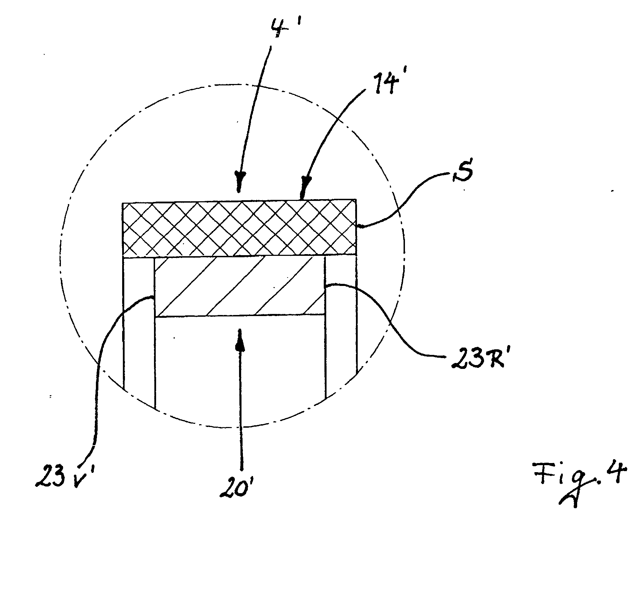

In Figur 4 ist ein alternatives Ausführungsbeispiel einer Dichtung 4' dargestellt. Auch diese besteht wiederum aus einem radial innen liegenden metallischen Ring 20' und einem radial außen liegenden Ring 14' aus einem Kunststoffmaterial. Der Ring 14' steht axial in beide Richtungen über den metallischen Ring 20' über. Da der Überstand beidseitig gleich ist, ist eine fehlerhafte Montage ausgeschlossen. Auch im vorliegenden Fall ist die Montageendstellung dann erreicht, wenn der Ring 20' mit beiden Stirnflächen 23R' und 23V' an der Stirnseite des Rohres 3 bzw. dem Rohrsitzboden des Verschraubungskörpers 2 zur Anlage gelangt. Dabei kann das Volumen des beidseitig über den metallischen Ring 20' überstehenden Kunststoffmaterials in der Summe so bemessen werden, daß damit die Kammer zwischen der Dichtfläche 16 des Rohres 3 und dem Innenkonus 9 des Verschraubungskörpers 2 ausgefüllt wird, sofern über die gesamte axiale Erstreckung des aus Kunststoffmaterial bestehenden Rings 14' eine hinreichende axiale Verschiebbarkeit sichergestellt ist. Die Verbindung zwischen dem metallischen Ring 20' und dem aus Kunststoffmaterial bestehenden Ring 14' sollte daher in diesem Fall nur eine begrenzte Scherfestigkeit aufweisen.

## Patentansprüche

1. Rohrverbindung (1) mit einem umgeformten Rohr (3), einem Verschraubungskörper (2) mit einem Innenkonus (9) und einem sich daran anschließenden zylindrischen Endabschnitt (18) sowie einer Überwurfmutter (5) mit einem Innenkonus (10), wobei das umgeformte Rohr (3) eine erste keglige Spannfläche (7), die mit dem Innenkonus (9) des Verschraubungskörpers (2) zusammenwirkt und eine zweite keglige Spannfläche (8), die mit dem Innenkonus (10) der Überwurfmutter (5) zusammenwirkt, aufweist, und wobei zwischen der Stirnfläche (22) des umgeformten Rohres (3) und einer gegenüberliegenden Stirnfläche (24) des Verschraubungskörpers (2) eine Dichtung (4, 4') angeordnet ist, die zumindest zum Teil aus einem verformbaren Kunststoffmaterial besteht, **dadurch gekennzeichnet, daß** das Kunststoffmaterial infolge einer axialen Komprimierung der Dichtung (4, 4') in entgegengesetzte Richtung zur Bewegungsrichtung des Rohres (3) bei seiner Fixierung in eine Kammer (21) preßbar ist, die von dem Innenkonus (9) des Verschraubungskörpers (2), einer an die erste keglige Spannfläche (7) des umgeformten Rohres (3) angrenzende Dichtfläche (16) des umgeformten Rohres (3) und einer Stirnfläche (S) eines aus Kunststoffmaterial bestehenden Teils der Dichtung (4, 4') in deren unkomprimierten Zustand begrenzt wird.

2. Rohrverbindung nach Anspruch 1, **dadurch gekennzeichnet, daß** der Innenkonus (9) des Verschraubungskörpers (2) einen Kegelwinkel von 24° und/oder der Innenkonus (10) der Überwurfmutter (5) einen Kegelwinkel von 90° aufweist.

3. Rohrverbindung nach Anspruch 1 oder 2, **dadurch gekennzeichnet, daß** die Dichtung (4') aus einem radial innenliegenden metallischen Ring (20') und einem damit verbundenen radial außenliegenden Ring (14') aus Kunststoffmaterial besteht, wobei die Breite des aus Kunststoffmaterial bestehenden Rings (14') größer als die Breite des metallischen Rings (20') ist.

4. Rohrverbindung nach Anspruch 3, **dadurch gekennzeichnet, daß** der aus Kunststoffmaterial bestehende Ring (14') zu beiden Seiten einen gleichen Überstand über den metallischen Ring (20') aufweist.

5. Rohrverbindung nach Anspruch 1 oder 2, **dadurch gekennzeichnet, daß** die Dichtung (4) aus einem radial innen liegenden metallischen Ring (20) und einem damit verbundenen radial außen liegenden Ring (14) aus Kunststoffmaterial besteht, wobei der aus dem Kunststoffmaterial bestehende Ring (14)in einer Stufe (19) des metallischen Rings (20) angeordnet ist und sowohl radial nach außen als auch einseitig in axiale Richtung über den metallischen Ring (20) vorsteht.

6. Rohrverbindung nach Anspruch 1 oder 2, **dadurch gekennzeichnet, daß** die Dichtung ausschließlich aus einem Kunststoffmaterial, vorzugsweise PTFE, besteht und eine radial nach außen hin zunehmende Breite besitzt.

7. Rohrverbindung nach einem der Ansprüche 1 bis 6, **dadurch gekennzeichnet, daß** das umgeformte Rohr (3) in axiale Richtung mit einer konischen Dichtfläche (16) ausläuft, deren Kegelwinkel mindestens 30° beträgt.

8. Rohrverbindung (1) nach einem der Ansprüche 1 bis 6, **dadurch gekennzeichnet, daß** das umgeformte Rohr (3) an seinem Innenmantel einen achsparallelen Endabschnitt aufweist, dessen Außendurchmesser gegenüber dem Innendurchmesser des zylindrischen Endabschnitts (18) des Verschraubungskörpers (2) reduziert ist, wobei der Außenmantel des Endabschnitts des Rohres (3) in die Dichtfläche (16) übergeht.

9. Rohrverbindung nach einem der Ansprüche 1 bis 8, **dadurch gekennzeichnet, daß** das umgeformte Rohr (3) an seinem Ende eine senkrecht zu seiner Längsachse ausgerichtete Stirnfläche (22) besitzt.

10. Rohrverbindung nach Anspruch 9, **dadurch gekennzeichnet, daß** die Stirnfläche (22) zur Bildung der Dichtfläche (16) außen angefast ist.

## Claims

1. Pipe coupling (1) comprising a shaped pipe (3), a screw body (2) with an inner cone (9) and a cylindrical end section (18) adjacent thereto and a union nut (5) with an inner cone (10), wherein the shaped pipe (3) has a first conical clamping face (7) cooperating with the inner cone (9) of the screw body (2) and a second conical clamping face (8) cooperating with the inner cone (10) of the union nut (5) and wherein arranged between the end face (22) of the shaped pipe (3) and an opposing end face (24) of the screw body (2) is a seal (4, 4'), consisting at least partly of a deformable plastics material, **characterised in that** the plastics material, owing to an axial compression of the seal (4, 4'), can be pressed in the opposite direction to the movement direction of the pipe (3) while being fixed into a chamber (21), which is bordered by the inner cone (9) of the screw body (2), a sealing face (16) of the shaped pipe (3) adjacent to the first conical clamping face (7) of the shaped pipe (3), and an end face (S) of a part of the seal (4, 4') consisting of plastics material in the uncompressed state thereof.

2. Pipe coupling according to claim 1, **characterised in that** the inner cone (9) of the screw body (2) has a cone angle of 24° and/or the inner cone (10) of the union nut (5) has a cone angle of 90°.

3. Pipe coupling according to claim 1 or 2, **characterised in that** the seal (4') consists of a radially inner metal ring (20') and a radially outer ring (14') connected thereto and made of plastics material, wherein the width of the ring (14') consisting of plastics material is greater than the width of the metal ring (20').

4. Pipe coupling according to claim 3, **characterised in that** the ring (14') consisting of plastics material has an identical projection beyond the metal ring (20') on either side.

5. Pipe coupling according to claim 1 or 2, **characterised in that** the seal (4) consists of a radially inner metal ring (20) and a radially outer ring (14) connected thereto and made of plastics material, the ring (14) consisting of the plastics material being arranged in a step (19) of the metal ring (20) and projecting both radially outwardly and also to one side in the axial direction beyond the metal ring (20).

6. Pipe coupling according to claim 1 or 2, **characterised in that** the seal consists exclusively of a plastics material, preferably PTFE, and has a width which increases radially outwardly.

7. Pipe coupling according to any one of claims 1 to 6, **characterised in that** the shaped pipe (3) ends with a conical sealing face (16) in the axial direction, the cone angle of which is at least 30°.

8. Pipe coupling (1) according to any one of claims 1 to 6, **characterised in that** the shaped pipe (3), on its inner surface, has an axially parallel end section, of which the external diameter is reduced relative to the internal diameter of the cylindrical end section (18) of the screw body (2), the outer surface of the end section of the pipe (3) passing into the sealing face (16).

9. Pipe coupling according to any one of claims 1 to 8, **characterised in that** at its end the shaped pipe (3) has an end face (22) oriented perpendicular to its longitudinal axis.

10. Pipe coupling according to claim 9, **characterised in that** the end face (22) is chamfered on the outside to form the sealing face (16).

## Revendications

1. Raccord (1) de tuyau comprenant un tuyau (3) déformé et un corps (2) de vissage ayant un cône (9) intérieur et un tronçon (18) d'extrémité cylindrique qui s'y raccorde, ainsi qu'un écrou (5) d'accouplement ayant un cône (10) intérieur, le tube (3) déformé ayant une première surface (7) conique de blocage qui coopère avec le cône (9) intérieur du corps (2) de vissage et une deuxième surface (8) conique de blocage qui coopère avec le cône (10) intérieur de l'écrou (5) d'accouplement, et il est placé entre la surface (22) frontale du tuyau (3) déformé et une surface (24) frontale opposée du corps (2) de vissage une garniture (4, 4') d'étanchéité qui est au moins en partie en une matière plastique déformable. **caractérisé en ce que** la matière plastique peut, à la suite d'une compression axiale de la garniture (4, 4') d'étanchéité dans le sens opposé au sens de déplacement du tuyau (3), être repoussée lors de son immobilisation dans une chambre (21) qui est délimitée, en son état non comprimé, par le cône (9) intérieur du corps (2) de vissage, par une surface (16) d'étanchéité du tuyau (3) déformé voisine de la première surface (7) conique de blocage du tuyau (3) déformé et par une surface (S) frontale d'une partie en matière plastique de la garniture (4, 4') d'étanchéité.

2. Raccord de tuyau suivant la revendication 1, **caractérisé en ce que** le cône (9) intérieur du corps (2) de vissage a un angle de cône de 24° et/ou le cône (10) intérieur de l'écrou (5) d'accouplement a un angle de cône de 90°.

3. Raccord de tuyau suivant la revendication 1 ou 2, **caractérisé en ce que** la garniture (4') d'étanchéité est constituée d'une bague (20') métallique à l'intérieur radialement et d'une bague (14') en matière plastique à l'extérieur radialement et qui y est reliée, la largeur de la bague (14') en matière plastique étant supérieure à la largeur de la bague (20') métallique.

4. Raccord de tuyau suivant la revendication 3, **caractérisé en ce que** la bague (14') en matière plastique dépasse des deux côtés d'une même valeur de la bague (20') métallique.

5. Raccord de tuyau suivant la revendication 1 ou 2, **caractérisé en ce que** la garniture (4) d'étanchéité est constituée d'une bague (20) métallique se trouvant à l'intérieur radialement et d'une bague (14) en matière plastique se trouvant à l'extérieur radialement et qui y est reliée, la bague (14) en la matière plastique étant placée dans un épaulement(19) de la bague (20) métallique et faisant saillie à la fois radialement vers l'extérieur et également d'un côté en direction axiale de la bague (20) métallique.

6. Raccord de tuyau suivant la revendication 1 ou 2, **caractérisé en ce que** la garniture d'étanchéité est exclusivement en une matière plastique, de préférence en PTFE, et a une largeur augmentant radialement vers l'extérieur.

7. Raccord de tuyau suivant l'une des revendications 1 à 6, **caractérisé en ce que** le tuyau (3) déformé s'étend en direction axiale en ayant une surface (16) conique d'étanchéité, dont l'angle du cône est d'au moins 30°.

8. Raccord (1) de tuyau suivant l'une des revendications 1 à 6, **caractérisé en ce que** le tuyau (3) détonné a sur sa surface latérale intérieure un tronçon d'extrémité parallèle à l'axe, dont le diamètre extérieur est réduit par rapport au diamètre intérieur du tronçon (18) d'extrémité cylindrique du corps (2) de vissage, la surface latérale extérieure du tronçon d'extrémité du tuyau (3) se transformant en la surface (16) d'étanchéité.

9. Raccord de tuyau suivant l'une des revendications 1 à 8, **caractérisé en ce que** le tuyau (3) déformé a à son extrémité une surface (22) frontale dirigée perpendiculairement à son axe longitudinal.

10. Raccord de tuyau suivant la revendication 9, **caractérisé en ce que** la surface (22) frontale est biseautée à l'extérieur pour former la surface (16) d'étanchéité.
